# EUROPÄISCHE PATENTSCHRIFT

(11) **EP 0 655 466 B1**
(45) Veröffentlichungstag und Bekanntmachung des Hinweises auf die Patenterteilung: **30.07.1997**
(21) Anmeldenummer: 94118091.1
(22) Anmeldetag: 17.11.1994
(51) Int. Cl.: C08F 10/00, C08F 4/642

(54) **Katalysatorsysteme vom Typ der Ziegler-Natta-Katalysatoren**
Catalytic systems of the Ziegler-Natta type
Systèmes catalytiques du type Ziegler-Natta

(30) Priorität: 25.11.1993 DE 4340140
(43) Veröffentlichungstag der Anmeldung: 31.05.1995
(73) Patentinhaber: BASF Aktiengesellschaft, 67063 Ludwigshafen (DE)
(72) Erfinder: Kersting, Meinolf, Dr., D-67098 Bad Dürkheim (DE); Hungenberg, Klaus-Dieter, Dr., D-69488 Birkenau (DE); Kölle, Peter, Dr., D-67098 Bad Dürkheim (DE); Kerth, Jürgen, Dr., D-67316 Carlsberg (DE)

(56) Entgegenhaltungen:
- FR-A- 2 332 288
- FR-A- 2 474 039

## Beschreibung

Die vorliegende Erfindung betrifft Katalysatorsysteme vom Typ der Ziegler-Natta-Katalysatoren, enthaltend als aktive Bestandteile
a) eine titanhaltige Feststoffkomponente, die Titan, Magnesium, Halogen und einen Carbonsäureester als Elektronendonorverbindung enthält,
   sowie als Cokatalysator
b) eine Aluminiumverbindung und
c) gegebenenfalls eine weitere Elektronendonorverbindung,
   wobei bei der bis zu dreistündigen Voraktivierung der titanhaltigen Feststoffkomponente a) mit dem Cokatalysator als Aluminiumverbindung b) eine Verbindung der folgenden Formel I

   R_{m₁}Al - (OCOR¹)_{m₂} (I)

   verwendet wird, in der
   - R und R¹: jeweils gleich oder verschieden sind und für einen Wasserstoffrest oder einen C₁- bis C₈-Alkylrest stehen
   - m₁ und m₂: jeweils die Zahl 1 oder 2 bedeuten und in ihrer Summe die Zahl 3 ergeben.

Außerdem betrifft die Erfindung ein Verfahren zur Herstellung derartiger Ziegler-Natta-Katalysatorsysteme und die Herstellung von Polymerisaten des Propylens mit Hilfe dieser Katalysatorsysteme.

Katalysatorsysteme vom Typ der Ziegler-Natta-Katalysatoren sind u.a. aus der EP-B 014523, der EP-A 023425, der EP-A 045975 und der EP-A 195497 bekannt. Diese Systeme werden insbesondere zur Polymerisation von α-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

In der EP-A 427080 ist die Herstellung von Ziegler-Natta Katalysatoren und die damit katalysierte Polymerisation von Propylen beschrieben. Diese Katalysatoren zeichnen sich durch eine gute Produktivität und die damit katalysierte Polymerisation durch eine gute Stereospezifität aus. Allerdings ist die Morphologie des Polymerpulvers für viele Zwecke nicht homogen genug. Dabei sollte vor allem der Anteil an Feinstkorn mit einer Partikelgröße von kleiner 0,25 mm verringert werden.

Weiterhin ist aus der DE-A 41 30 353 ein Verfahren zur Herstellung eines Ziegler-Natta-Katalysatorsystems bekannt, wobei im Anschluß an die Umsetzung der titanhaltigen Feststoffkomponente mit dem Cokatalysator das Reaktionsgemisch durch Reaktion mit Kohlendioxid inaktiviert wird. Das dabei erhaltene Katalysatorsystem zeichnet sich durch eine hohe Produktivität aus und liefert Polymerisate des Propylens mit einer hohen Stereospezifität und einer guten Morphologie, d.h. einem geringen Anteil an Feinstkorn. Allerdings gestaltet sich die Reaktion mit Kohlendioxid verfahrenstechnisch teilweise relativ aufwendig, da zwischen der Aktivierung des Katalysatorsystems und der eigentlichen Polymerisation noch die Umsetzung mit Kohlendioxid vorgenommen werden muß.

Der vorliegenden Erfindung lag daher die Aufgabe zugrunde, Katalysatorsysteme vom Typ der Ziegler-Natta-Katalysatoren bereitzustellen, die mit weniger Aufwand zubereitet werden müssen, zugleich aber eine hohe Produktivität aufweisen und eine hohe Stereospezifität der Polymerisation sowie einen möglichst geringen Anteil an Feinstkorn im Polymerisat bewirken.

Demgemäß wurden die eingangs definierten Katalysatorsysteme vom Typ der Ziegler-Natta-Katalysatoren gefunden.

Die erfindungsgemäßen Katalysatorsysteme enthalten u.a. neben einer titanhaltigen Feststoffkomponente a) noch einen Cokatalysator. Als Cokatalysator kommt dabei die Aluminiumverbindung b) in Frage. Vorzugsweise wird neben dieser Aluminiumverbindung als weiterer Bestandteil des Cokatalysators noch eine Elektronendonorverbindung c) eingesetzt.

Der Cokatalysator kann dabei zum einen bei der Voraktivierung der titanhaltigen Feststoffkomponente a) dieser hinzugefügt werden, zum anderen besteht noch die Möglichkeit, nach der Voraktivierung und vor oder während der Polymerisation weiteren Cokatalysator der titanhaltigen Feststoffkomponente a) beizumischen.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger wird SiO₂·aAl₂O₃ verwendet, wobei a für einen Wert von 0 bis 2, insbesondere von 0 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner-Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel III 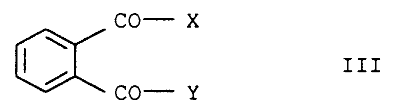 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren der allgemeinen Formeln IVa bzw. IVb, sowie Monoester von gegebenenfalls substituierten Benzophenon-2-carbonsäuren der allgemeinen Formel V 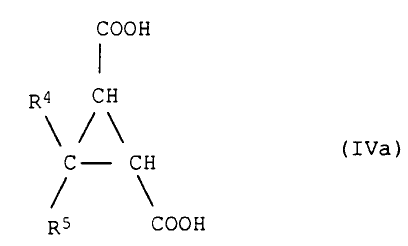 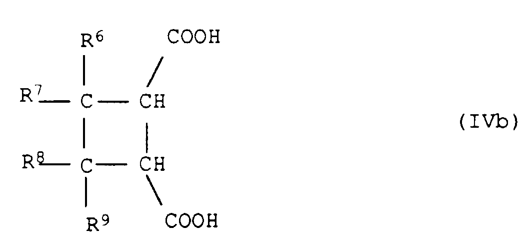 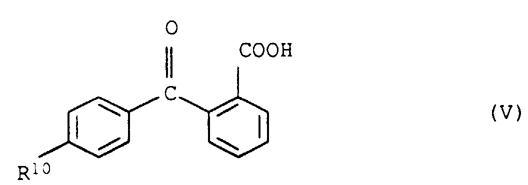 R⁴, R⁵, R⁶, R⁷, R⁸ und R⁹ können in den obigen Formeln (IVa) und (IVb) unabhängig voneinander ein Wasserstoffatom, eine C₁- bis C₁₅-Alkylgruppe, eine C₇- bis C₁₅-Alkylarylgruppe oder eine 5- bis 7-gliedrige Cycloalkylgruppe, die ihrerseits C₁- bis C₁₀-Alkylgruppen tragen kann bedeuten, R¹⁰ kann in der Formel V für ein Wasserstoffatom, eine C₁- bis C₈-Alkylgruppe oder ein Chloratom stehen.

Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 48 57 613 beschrieben.

Bei der Herstellung der titanhaltigen Feststoffkomponente a) wird bevorzugt folgendes zweistufige Verfahren angewandt:

In der ersten Stufe versetzt man zunächst einen feinteiligen Träger, bevorzugt SiO₂·aAl₂O₃ - wobei a für eine Zahl im Bereich von 0 bis 2, insbesondere im Bereich von 0 bis 0,5 steht - der in der Regel einen Teilchendurchmesser von 0,1 bis 1000 µm, insbesondere von 10 bis 300 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol des drei- oder vierwertigen Titans und 0,01 bis 1 mol, insbesondere 0,1 bis 0,5 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommt dabei u.a. die Aluminiumverbindung b) in Frage.

Erfindungsgemäß wird als Aluminiumverbindung b) bei der Voraktivierung der titanhaltigen Feststoffkomponente a) eine Verbindung der folgenden Formel I

R_{m₁}Al - (OCOR¹)_{m₂} (I)

verwendet, in der

R und R¹ jeweils gleich oder verschieden sind und für einen Wasserstoffrest oder einen C₁- bis C₈-Alkylrest stehen, m₁ und m₂ jeweils die Zahl 1 oder 2 bedeuten und in ihrer Summe die Zahl 3 ergeben.

Bevorzugt wird eine solche Aluminiumverbindung b) der Formel I eingesetzt, in der R und R¹ jeweils gleich oder verschieden sind und für einen C₁- bis C₄-Alkylrest, m₁ für die Zahl 2 und m₂ für die Zahl 1 steht.

Unter diesen Aluminiumverbindungen b) sind Diethylaluminiumpropionat, Diethylaluminiumformiat, Dimethylaluminiumpropionat, Diisobutylaluminiumpropionat, Diethylaluminiumacetat, Dimethylaluminiumacetat sowie die entsprechenden Dialkylaluminiumderivate der Butansäure, insbesondere das Diethylaluminiumderivat der Butansäure besonders bevorzugt.

Die Herstellung derartiger Aluminiumverbindungen erfolgt u.a. durch Umsetzung der jeweiligen Trialkylverbindung mit der entsprechenden Carbonsäure [u.a. nach Y. Kimura, S. Sugaya, T. Ichimura, I. Taniguchi "Macromolecules" 20, 2329 (1987)].

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

R² ₙSi(OR³)₄₋ₙ II

wobei
R² gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R³ gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R² eine C₁- bis C₈-Alkylgruppe oder eine 5- bis 7-gliedrige Cycloalkylgruppe, sowie R³ eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten zur Voraktivierung verwendet werden.

Die Herstellung der erfindungsgemäßen Katalysatorsysteme erfolgt durch Umsetzen der titanhaltigen Feststoffkomponene a) mit dem Cokatalysator, d.h. der Aluminiumverbindung b) und gegebenenfalls der Elektronendonorverbindung c) bei Temperaturen von -20 bis 60°C, insbesondere von 0 bis 20°C und Drücken von 0 bis 60 bar, insbesondere von 0 bis 20 bar. Zweckmäßigerweise wird die titanhaltige Feststoffkomponente a) im Cokatalysator oder in einer Cokatalysatorlösung suspendiert.

Die Umsetzung erfolgt zweckmäßigerweise in der flüssigen Phase. Wenn der Cokatalysator bei der Reaktionstemperatur als Flüssigkeit vorliegt, kann mit oder ohne Lösungsmittel gearbeitet werden. Liegt der Cokatalysator bei der Reaktionstemperatur als Feststoff vor, empfiehlt sich die Verwendung eines inerten Lösungsmittels.

Als Lösungsmittel sind flüssige Kohlenwasserstoffe, bevorzugt C₅- bis C₁₀-Alkane, besonders bevorzugt Hexan oder Heptan, oder Gemische aus Kohlenwasserstoffen geeignet.

Bevorzugt werden solche Gemische verwendet, bei denen das Molverhältnis der erfindungsgemäß einzusetzenden Aluminiumverbindung b) zu Titan aus der titanhaltigen Feststoffkomponente a) 0,1:1 bis 10:1, insbesonders 1:1 bis 5:1, und das Molverhältnis von Aluminiumverbindung b) zur weiteren Elektronendonorverbindung c) 0,1:1 bis 200:1, insbesondere 3:1 bis 30:1 beträgt.

Die Reaktionsdauer für die Umsetzung beträgt bis zu drei Stunden, bevorzugt bis zu 30 Minuten.

Durch die Umsetzung der titanhaltigen Feststoffkomponente mit der erfindungsgemäß einzusetzenden Aluminiumverbindung b) der Formel (I) sowie gegebenenfalls der Elektronendonorverbindung c) erhält man ein voraktiviertes Katalysatorsystem vom Typ der Ziegler-Natta-Katalysatoren, welches als Feststoff isolierbar, lagerbestän-dig und nicht polymerisationsaktiv ist.

Vor oder während eines Einsatzes in einer Polymerisationsreaktion können die erfindungsgemäßen Katalysatorsysteme durch Umsetzen mit weiteren Cokatalysatoren weiter aktiviert werden. Als weitere Cokatalysatoren kommen hierbei ebenfalls Aluminiumverbindungen b) in Frage.

Als weitere Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Gegebenenfalls können als weitere Cokatalysatoren noch die gleichen Elektronendonorverbindungen c) verwendet werden, wie sie vorstehend beschrieben bei der Voraktivierung der titanhaltigen Feststoffkomponente a) eingesetzt werden.

Bevorzugt werden die Cokatalysatoren bei der weiteren Aktivierung in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 100:1, insbesondere 2:1 bis 80:1 beträgt.

Die erfindungsgemäßen Katalysatorsysteme eigenen sich besonders gut für die Herstellung von Polymerisaten des Propylens, d.h. Homopolymerisaten des Propylens und Copolymerisaten des Propylens zusammen mit anderen α-Olefinen.

Die Herstellung von Polyolefinen, insbesondere von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Neben den Homopolymerisaten des Propylens können auch Co- oder Terpolymerisate des Propylens mit anderen α, β-ungesättigten olefinischen Verbindungen mit 2 bis 8 C-Atomen hergestellt werden, z. B. von α-Monoolefinen oder von bifunktionellen α-Olefinen, wie beispielsweise Hexadi-1,5-en. Besonders geeignete Comonomere sind Ethylen, But-1-en, Pent-1-en, Hex-1-en und Oct-1-en. Für die Terpolymerisation besonders geeignete Comonomere sind Ethylen und But-1-en.

Die dabei erhaltenen Copolymerisate können sowohl blockartig, als auch statistisch oder alternierend aufgebaut sein. Das erfindungsgemäße Katalysatorsystem eignet sich insbesondere auch zur Herstellung von Propylen-Ethylen-Copolymerisaten mit bis zu 10 Gew.-% von einpolymerisiertem Ethylen und von Terpolymerisaten des Propylens mit untergeordneten Mengen von einpolymerisiertem Ethylen und But-1-en.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die Molmasse der dabei gebildeten Polyolefine kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die erfindungsgemäßen Propylenhomo- und -copolymerisate sind in den für die Polyolefine üblichen Molmassen erhältlich, wobei Polymerisate mit Molmassen zwischen 20 000 und 500 000 bevorzugt werden. Ihre Schmelzflußindizes, bei 230°C und unter einem Gewicht von 2,16 kg, nach DIN 53 735 liegen im Bereich von 0,1 bis 100 g/10 min, insbesondere im Bereich von 0,5 bis 50 g/10 min.

Das erfindungsgemäße Katalysatorsystem weist gegenüber den bisher bekannten Katalysatorsystemen eine höhere Produktivität und eine verbesserte Stereospezifität, insbesondere bei Gasphasenpolymerisationen auf. Die auf diese Weise erhältlichen Polymerisate zeichnen sich vor allem durch einen sehr geringen Feinstkornanteil mit einer Partikelgröße von kleiner 0,25 mm und einem niedrigen Restchlorgehalt aus. Weiterhin ist es bei dem erfindungsgemäßen Katalysatorsystem von Vorteil, daß der Voraktivierungsschritt der titanhaltigen Feststoffkomponente a) verfahrenstechnisch sehr wenig aufwendig ist.

Aufgrund ihrer guten mechanischen Eigenschaften eignen sich die mit dem erfindungsgemäßen Katalysatorsystem hergestellten Propylenpolymerisate vor allem für die Herstellung von Folien, Fasern und Formkörpern.

### Beispiele

### Beispiel 1

a) Herstellung der titanhaltigen Feststoffkomponente (1)
   In einer ersten Stufe wurde SiO₂, das einen Teilchendurchmesser von 20 bis 45 µm, ein Porenvolumen von 1,7 ml/g und eine spezifische Oberfläche von 330 m²/g aufwies, mit einer Lösung von n-Butyloctylmagnesium in n-Heptan versetzt, wobei pro Mol SiO₂ 0,3 Mol der Magnesiumverbindung eingesetzt wurden. Die Lösung wurde 45 Minuten bei 40°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,3 Mol von in Ethylbenzol gelöstem Di-isobutylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.
   Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
   Die titanhaltige Feststoffkomponente enthielt
   3,8 Gew.-% Ti
   6,2 Gew.-% Mg
   25,8 Gew.-% Cl.
b) Voraktivierung der titanhaltigen Feststoffkomponente
   In einem mit Rührer versehenen 1 l-Glasautoklaven wurden 700 ml n-Heptan vorgelegt und das Reaktionsgefäß auf eine Innentemperatur von 5°C abgekühlt. Zu dem Lösungsmittel wurden 47,4 mMol Diethylaluminiumpropionat (in Form einer 1,0-molaren Lösung in n-Heptan) und 1,3 ml Dimethoxyisobutylisopropylsilan (in Form einer 1,0-molaren Lösung in n-Heptan) zugegeben. Anschließend wurden 20 g der gemäß Beispiel 1a hergestellten titanhaltigen Feststoffkomponente zugegeben.
   Man erhielt 23,6 g eines Feststoffes.
c) Polymerisation von Propylen
   Die Polymerisation wurde in einem vertikal gerührten Gasphasenreaktor mit einem Nutzvolumen von 800 l in Anwesenheit von Wasserstoff als Molekulargewichtsregler durchgeführt. Der Reaktor enthielt ein bewegtes Festbett aus feinteiligem Polymerisat. Der Reaktorausstoß an Polymerisat betrug in allen Beispielen 85 kg Polypropylen pro Stunde.
   In den Gasphasenreaktor wurde bei einem Druck von 32 bar und 80°C gasförmiges Propylen eingeleitet. Bei einer mittleren Verweilzeit von 2,5 Stunden wurde mit Hilfe des in Beispiel 1 b beschriebenen Katalysatorsystems kontinuierlich polymerisiert, wobei pro Stunde 4,3 g des in Beispiel 1 b beschriebenen Katalysatorsystems, 250 mMol Triethylaluminium und 25 mmol Dimethoxyisobutylisopropylsilan als Cokatalysator verwendet wurden.
   Nach Beendigung der Gasphasenpolymerisation erhielt man ein Propylenhomopolymerisat mit einem Schmelzflußindex von 14,6 g/10 min., bei 230°C und 2,16 kg (nach DIN 53735).

### Beispiel 2

Im Unterschied zu Beispiel 1 wurden unter ansonsten gleichen Bedingungen bei der Voraktivierung 1b), lediglich 7,9 mMol Diethylaluminiumpropionat eingesetzt. Nach Beendigung der Gasphasenpolymerisation von Propylen 1c erhielt man ein Propylenhomopolymerisat mit einem Schmelzflußindex von 15,1 g/10 min., bei 230°C und 2,16 kg (nach DIN 53735).

### Vergleichsbeispiel A

Es wurde das Beispiel 1 unter ansonsten gleichen Bedingungen wiederholt, wobei aber auf die Voraktivierung der titanhaltigen Feststoffkomponente a) mit Diethylaluminumpropionat verzichtet wurde.

In der nachstehenden Tabelle sind die Ergebnisse der erfindungsgemäßen Beispiele 1 und 2 sowie des Vergleichsbeispiels A in bezug auf die Produktivität (g Polymer/g titanhaltiger Feststoffkomponente), den xylollöslichen Anteil (Maß für die Stereospezifität), den Feinstkornanteil (< 0,25 mm) und den Chlorgehalt der erhaltenen Propylenhomopolymerisate aufgeführt.

**Tabelle**

| | Beispiel 1 | Beispiel 2 | Vergleichsbeispiel A |
|---|---|---|---|
| Produktivität [g Polymer/ g titanhaltiger Feststoffkomponente] | 28670 | 25800 | 19500 |
| Xylollöslicher Anteil* [%] | 1,4 | 1,3 | 1,6 |
| Feinkornanteil [<0,25 mm]** [%] | 0,2 | 0,9 | 2,6 |
| Chlorgehalt*** [ppm] | 9 | 10 | 13 |

| | | | |
|---|---|---|---|
| * in siedendem Xylol bei 140°C | | | |
| ** durch Siebanalyse | | | |
| *** durch Elementaranalyse | | | |

Aus der Tabelle geht hervor, daß die erfindungsgemäßen Katalysatorsysteme zu Polymerisaten mit einer höheren Stereospezifität, einem geringeren Feinstkornanteil und einem reduzierten Chlorgehalt führen. Darüber hinaus zeichnen sich die erfindungsgemäße Katalysatorsysteme durch eine erhöhte Produktivität aus.

## Patentansprüche

1. Katalysatorsysteme vom Typ der Ziegler-Natta-Katalysatoren, enthaltend als aktive Bestandteile
a) eine titanhaltige Feststoffkomponente, die Titan, Magnesium, Halogen und einen Carbonsäureester als Elektronendonorverbindung enthält,
sowie als Cokatalysator
b) eine Aluminiumverbindung und
c) gegebenenfalls eine weitere Elektronendonorverbindung,
wobei bei der bis zu dreistündigen Voraktivierung der titanhaltigen Feststoffkomponente a) mit dem Cokatalysator als Aluminiumverbindung b) eine Verbindung der folgenden Formel I
R_{m₁}Al - (OCOR¹)_{m₂} (I)
verwendet wird, in der
R und R¹ jeweils gleich oder verschieden sind und für einen Wasserstoffrest oder einen C₁- bis C₈-Alkylrest stehen
m₁ und m₂ jeweils die Zahl 1 oder 2 bedeuten und in ihrer Summe die Zahl 3 ergeben.

2. Katalysatorsysteme nach Anspruch 1, in deren Aluminiumverbindung b) der Formel (I) R und R¹ jeweils gleich oder verschieden sind und für einen C₁- bis C₄-Alkylrest, m₁ für die Zahl 2 und m₂ für die Zahl 1 stehen.

3. Katalysatorsysteme nach den Ansprüchen 1 oder 2, in denen als Aluminiumverbindung b) Diethylaluminiumpropionat verwendet wird.

4. Katalysatorsysteme nach den Ansprüchen 1 bis 3, wobei als weitere Elektronendonorverbindung c) siliciumorganische Verbindungen der allgemeinen Formel (II)
R² ₙSi(OR³)₄₋ₙ (II)
verwendet werden, wobei R² gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R³ gleich oder verschieden ist und eine C₁- bis C₂₀-Alkylgruppe bedeutet und n für die Zahlen 1, 2 oder 3 steht.

5. Katalysatorsysteme nach den Ansprüchen 1 bis 4, aufgebracht auf SiO₂ · a Al₂O₃ als Trägermaterial, wobei a für einen Wert im Bereich von 0 bis 2 steht.

6. Verfahren zur Herstellung von Katalysatorsystemen gemäß den Ansprüchen 1 bis 5, dadurch gekennzeichnet, daß man die titanhaltige Feststoffkomponente a) und den Cokatalysator bei Temperaturen von -20 bis 60°C und Drücken von 0 bis 60 bar voraktiviert.

7. Verfahren zur Herstellung von Polymerisaten des Propylens durch Polymerisation von Propylen und gegebenenfalls von zugegebenen Comonomeren bei Temperaturen von 20 bis 150°C und Drücken von 1 bis 100 bar in Gegenwart von Ziegler-Natta-Katalysatorsystemen, dadurch gekennzeichnet, daß man Katalysatorsysteme gemäß den Ansprüchen 1 bis 5 verwendet.

## Claims

1. A catalyst system of the type comprising the Ziegler-Natta catalysts, containing, as active components,
a) a titanium-containing solid component which contains titanium, magnesium, halogen and a carboxylic ester as an electron donor
and, as a cocatalyst,
b) an aluminum compound and
c) if required, a further electron donor,
a compound of the following formula I
R_{m₁}Al - (OCOR¹)_{m₂} (I)
where
R and R¹ are identical or different and are each hydrogen or C₁-C₈-alkyl and
m₁ and m₂ are each 1 or 2 and sum to give 3,
being used as aluminum compound b) in the preactivation, which takes up to three hours, of the titanium-containing solid component a) with the cocatalyst.

2. A catalyst system as claimed in claim 1, in whose aluminum compound b) of the formula (I) R and R¹ are identical or different and are each C₁-C₄-alkyl, m₁ is 2 and m₂ is 1.

3. A catalyst system as claimed in claim 1 or 2, wherein the aluminum compound b) used is diethylaluminum propionate.

4. A catalyst system as claimed in any of claims 1 to 3, wherein an organosilicon compound of the formula (II)
R² ₙSi(OR³)₄₋ₙ (II)
where the radicals R² are identical or different and are each C₁-C₂₀-alkyl, 5-membered to 7-membered cycloalkyl which in turn may carry a C₁-C₁₀-alkyl group, or C₆-C₂₀-aryl or arylalkyl, the radicals R³ are identical or different and are each C₁-C₂₀-alkyl and n is 1, 2 or 3, is used as a further electron donor c).

5. A catalyst system as claimed in any of claims 1 to 4, applied on SiO₂ · a Al₂O₃ as a carrier, where a is from 0 to 2.

6. A process for the preparation of a catalyst system as claimed in any of claims 1 to 5, wherein the titanium-containing solid component a) and the cocatalyst are preactivated at from -20 to 60°C and from 0 to 60 bar.

7. A process for the preparation of a polymer of propylene by polymerization of propylene and, if required, of added comonomers at from 20 to 150°C and from 1 to 100 bar in the presence of a Ziegler-Natta catalyst system, wherein a catalyst system as claimed in any of claims 1 to 5 is used.

## Revendications

1. Systèmes catalyseurs du type catalyseurs de Ziegler-Natta contenant, en tant que constituants actifs
**a)** un composant solide titanifère qui contient du titane, du magnésium, un halogène, et un ester d'acide carboxylique en tant que donneur d'électrons,
et en tant que catalyseur auxiliaire,
**b)** un dérivé de l'aluminium et
**c)** le cas échéant un autre donneur d'électrons,
pour lesquels, à l'activation préalable pouvant durer jusqu'à 3 h du composant solide titanifère a) avec le catalyseur auxiliaire consistant en le dérivé d'aluminium b), on utilise un composé de formule I
Rₘ₁Al --- (OCOR¹)ₘ₂ (I)
dans laquelle
R et R¹, ayant des significations identiques ou différentes, représentent chacun l'hydrogène ou un groupe alkyle en C1-C8, et
m₁ et m₂ sont égaux chacun à 1 ou 2, leur somme étant égale à 3.

2. Systèmes catalyseurs selon la revendication 1, pour lesquels, dans la formule I du dérivé de l'aluminium b) , R et R¹, ayant des significations identiques ou différentes, représentent chacun un groupe alkyle en C1-C4, m₁ est égal à 2 et m₂ est égal à 1.

3. Systèmes catalyseurs selon les revendications 1 ou 2, pour lesquels le dérivé de l'aluminium b) est le propionate de diéthylaluminium.

4. Systèmes catalyseurs selon les revendications 1 à 3, pour lesquels on utilise en tant qu'autres donneurs d'électrons c), des dérivés organiques du silicium répondant à la formule générale II
R² ₙSi (OR³)₄₋ₙ (II)
dans laquelle les divers symboles R², ayant des significations identiques ou différentes, représentent chacun un groupe alkyle en C1-C20, un groupe cycloalkyle en C5-C7 qui peut lui-même porter un groupe alkyle en C1-C10, ou un groupe aryle ou aralkyle en C6-C20, les divers symboles R³, ayant des significations identiques ou différentes, représentent chacun un groupe alkyle en C1-C20 et n est égal à 1, 2 ou 3.

5. Systèmes catalyseurs selon les revendications 1 à 4, appliqués sur une matière de support du type SiO₂.a Al₂O₃, a étant un nombre qui va de 0 à 2.

6. Procédé de préparation des systèmes catalyseurs selon les revendications 1 à 5, caractérisé par le fait que l'on soumet le composant solide titanifère a) et le catalyseur auxiliaire à activation préalable à des températures allant de -20 à +60° C et des pressions allant de 0 à 60 bar.

7. Procédé de préparation de polymères du propylène par polymérisation de ce dernier et le cas échéant d'autres comonomères à des températures de 20 à 150° C, sous des pressions de 1 à 100 bar, en présence de systèmes catalyseurs du type Ziegler-Natta, caractérisé par le fait que l'on utilise des systèmes catalyseurs selon les revendications 1 à 5.
